# EUROPÄISCHE PATENTSCHRIFT

(11) **EP 0 540 886 B1**
(45) Veröffentlichungstag und Bekanntmachung des Hinweises auf die Patenterteilung: **01.05.1996**
(21) Anmeldenummer: 92117067.6
(22) Anmeldetag: 06.10.1992
(51) Int. Cl.: G05D 23/12, F28F 13/00, F28D 15/02

(54) **Verfahren und Vorrichtung zur Begrenzung der Temperatur**
Method and device for temperature limitation
Méthode et dispositif pour limiter la température

(30) Priorität: 05.11.1991 AT 2188/91
(43) Veröffentlichungstag der Anmeldung: 12.05.1993
(73) Patentinhaber: Grabner, Werner, Dr., A-1090 Wien (AT)
(72) Erfinder: Grabner, Werner, Dr., A-1090 Wien (AT)
(74) Vertreter: Wallner, Gerhard, Dipl.-Ing.

(56) Entgegenhaltungen:
- EP-A- 0 013 362
- DE-A- 1 943 122
- DE-B- 2 739 199
- US-A- 3 957 107
- US-A- 4 402 358
- PHILIPS TECHNISCHE RUNDSCHAU Bd. 33, Nr. 4, Dezember 1973, Seiten 108 - 117 G. A.A.ASSELMAN ET AL. 'Das Wärmerohr'
- PATENT ABSTRACTS OF JAPAN vol. 10, no. 153 (M-484)(2209) 3. Juni 1986 & JP-A-61 006 587
- PATENT ABSTRACTS OF JAPAN vol. 8, no. 180 (M-318)(1617) 18. August 1984 & JP-A-59 071 986

## Beschreibung

Die Erfindung bezieht sich auf ein Verfahren und auf eine Vorrichtung zur Begrenzung der Temperatur eines mit einer Heizung verbundenen Deckeis, bei dem zwischen der Heizung und dem zu beheizenden Deckei eine Kammer mit einem Verdampfbaren flüssigen Wärmeträger vorgesehen ist.

Eine Wärmekoppiung zur Heizung oder Kühlung erfolgt in der Praxis entweder durch mechanischen Kontakt, strömende Medien wie Luft oder Flüssigkeit oder durch Wärmestrahlung.

Beim Einsatz strömender Medien kann durch Veränderung der Strömungsmenge der Wärmefluß zum zweiten Körper gesteuert werden. Dazu ist jedoch eine relativ aufwendige Pumpenkonstruktion oder Thermosiphonkonstruktion erforderlich. Hohe Temperaturen sind nur sehr schwer zu beherrschen.

Wärmestrahlung ist im Einsatz durch den geringen Wärmetransport sehr limitiert und funktioniert nur bei relativ hohen Temperaturdifferenzen. Eine kontrollierte Steuerung des Wärmeflusses ist außerdem sehr schwer zu realisieren. Ein mechanischer Kontakt bringt die geringsten Wärmeverluste und ist auch konstruktiv am leichtesten zu realisieren. Der Nachteil eines mechanischen Kontaktes ist der Verlust der Steuerungsmöglichkeit des Wärmeflusses. E ne Änderung des Wärmeflusses ist nur durcn mechanische Anderung des Kontaktes möglich.

Im technischen Meßgeräte- und Apparatebau, aber auch bei Industrieanlagen, ist sehr oft eine Wärmeankopplung zwischen zwei Teilen erforderlich, bei welcher die maximale Temperatur eines der beiden Körper nicht überschritten werden soll. Die Ankopplung kann durch mechanischen Kontakt oder durch fließende Medien erfolgen. Bei mechanischem Kontakt besteht das Problem der konstanten Wärmeleitung auch bei hohen Temperaturen, wodurch einer der beiden Teile auf Grund seiner begrenzten Temperaturbeständigkeit beschädigt werden kann. Eine Verminderung des Wärmekontaktes bei Überschreiten einer vorgegebenen Grenztemperatur ist bei derartigen Anwendungen erforderlich, was jedoch praktisch nur durch mechanische Trennung der beiden Verbindungsflächen möglich ist.

Eine Anwendung ist zum Beispiel die Regelung der Temperatur eines Körpers. Wird dieser Körper thermisch gut isoliert, funktioniert die Regelung bei hohen Temperaturen auf Grund der Wärmeabstrahlung sehr gut. Sollte dieser Körper jedoch wieder rasch abgekühlt werden, ist eine gute Wärmeleitung zu einem Kühlkörper erforderlich. Eine permanente Wärmeleitung zu einem Kühlkörper würde jedoch eine Erhitzung auf hohe Temperaturen verhindern.

Ein anderes Beispiel ist der Einsatz von thermoelektrischen Elementen (Peltierelemente) zur Heizung und Kühlung von Apparate- und Anlagenteilen oder beim Einsatz dieser Elemente zur direkten Gewinnung von elektrischer Energie aus Wärme.

Der entscheidende Nachteil handelsüblicher Peltierelemente ist der nach oben begrenzte Temperaturbereich, welcher in erster Linie durch die verwendbaren Legierungen der Elemente und durch das verwendete Lötmaterial (meist Lötzinn) gegeben ist. Dadurch ist der mit Peltierelementen erreichbare Temperaturbereich nach oben mit maximal 250° C begrenzt. Eine Zusatzheizung für die höhere Temperatur führt zur Zerstörung der Peltierelemente.

Aus der DE-A-2739199 bzw DE-A-1937782 sind Wärmerohre bekannt geworden, die zur geregelten Kühlung einer Wärmequelle eingesetzt werden, wobei für die Regelung entweder mechanische Druckerhöhungseinrichtungen oder spezielle Wärmetransportflüsssigkeiten vorgesehen werden, sodaß Übertemperaturen abgebaut und die Betriebstemperatur erhalten bleibt. Abgesehen von der Aufgabenstellung (Kühlung) sind Wärmerohre für den Wärmetransport von der Siedestelle zur Kondensationsstelle eingenchtet und nicht für die Unterbrechung der Wärmeleitung innerhalb eines Deckels (ca 2mm) geeignet. Die Verwendung von Kapillaren verlangt eine eigene Produtionstechnik.

Ziel der vorliegenden Erfindung ist ein Verfahren zur Senkung des Wärmekontaktes zwischen einem beheizten und einem unbeheizten Körper bei Überschreitung einer Grenztemperatur. Durch die Schaffung dieses Wärmeflußventils ist es möglich einen der beiden Körper auf eine hohe Temperatur aufzuheizen, ohne daß die Grenztemperatur des angekoppelten Körpers überschritten wird. Bei Unterschreiten der Grenztemperatur wird dieses Ventil automatisch geöffnet und wird dadurch der erforderliche Wärmekontakt zwischen den beiden Körpem wieder hergestellt.

Das erfindungsgemäße Verfahren ist dadurch gekennzeichnet, daß bei Erreichen der Siedetemperatur der verdampfte Wärmeträger in ein gekühltes Ausgleichsgefäß gedrängt wird und die Beheizung des Deckels durch die in der Kammer verbleibende dampfförmige Phase des Wärmeträgers verringert wird. Weitere ausgestaltende Merkmale sind in den Ansprüchen 2 bis 5 angegeben. Die erfindungsgemäße Vorrichtung zur Durchführung des Verfahrens ist dadurch gekennzeichnet. daß zwischen einem Heizkörper und dem beheiztem Deckel eine Flüssigkeitskammer verbunden mit einem gekühltem Ausgleichsgefäß vorgesehen ist, die eine Umrandung und ein Entlüftungsrohr aufweist, wobei die Oberflächen des Heizkörpers und des Deckels im Rahmen der Kammer wärmereflektierend ausgebildet sind und die Umrandung aus einem schlecht wärmeleitenden, insbesondere dünnwandigen Material gebildet ist. Insbesondere ist das Ausgleichsgefäß taschenoder balgförmig ausgebildet und aus einem chemisch resistenten Material gefertigt.

Die Erfindung wird an Hand der schematischen Darstellung einer erfindungsgemäßen Vorrichtung erklärt.

Zwischen dem Heizkörper 1 und dem Deckel 2 ist eine Kammer 3 mit einer Verbindung zu einem externen Ausgleichsgefäß 4 angeordnet, so daß ein vollkommen geschlossenes System vorliegt. Die Kammer 3 besteht aus zwei großflächigen, wärmereflektierenden Platten mit geringerm Abstand und einer Umrandung 5 aus einem Material mit geringer Wärmeleitung. Zusätzlich ist ein Entlüftungsrohr 6 eingebaut. Das Ausgleichsgefäß 4 befindet sich außerhalb der beheizten Zone auf Raumtemperatur und besteht aus möglichst elastischem Material mit einem Volumen größer als das Volumen der Kammer 3 und ist gut wärmeleitend.

Die Kammer und das Ausgleichsgefäß werden bei Raumtemperatur luftfrei derart mit einer Flüssigkeit über das Entlüfterronr (6) gefüllt, daß die Kammer (3) und das Ausgleichgefäß (4) im entspannten Zustand vollständig gefüllt ist. Bei niedrigen Temperaturen herrscht eine gute Wärmekopplung infolge Wärmeleitung und Wärmetransport durch die bewegte Fiüssigkeit zwischen den beiden Platten der Kammer. überschreitet die Temperatur in der Kammer (3) den Siedepunkt der eingefüllten Flüssigkeit, beginnt diese zu verdampfen und kondensiert im angeschlossenen Ausgleichsgefäß, welches sich auf Raumtemperatur befindet. Das Ausgleichsgefäß ist flexibel ausgebildet, insbesondere taschen- oder balgartig, so daß der DrucK im System nur geringfügig über dem Atmosphärendruck ist. Ist die gesamte Flüssigkeit in der Kammer verdampft, verbleibt nur mehr die durch den Dampf und die Seitenwände verbleibende Wärmeleitung und die von den beiden Flächen ausgehende Wärmestrahlung. Die durch diese verringerte Wärmeleitung transportierte Wärmemenge zur Platte am nicht hitzebeständigen Körper kann leicht abgeleitet werden, sodaß dieser seine kritische Temperatur nicnt mehr erreicht. Sinkt die Temperatur innerhalb der Kammer (3), strömt die in der Ausgleichskammer befindliche Flüssigkeit zurück in die Kammer und diese wird wieder vollständig gefüllt. Nach Füllung der Kammer (3) besteht wieder ein guter Wärmekontakt infolge Wärmeleitung zwischen den beiden Platten. Der große Vorteil der gegerständlichen Erfindung liegt in der Möglichkeit der Begrenzung des Wärmeflusses zwischen zwei Körpern bei Überschreiten einer Grenztemperatur. Der maximale Wärmefluß wird ohne bewegliche Teile nur durch die Dimensionierung der Plattengröße eingestellt. Die Grenztemperatur wird durch die eingefüllte Flüssigkeit bestimmt. Ein wichtiger Punkt ist hiebei der Siedepunkt der Flüssigkeit und der verwendete Druck. Als Flüssigkeit eignet sich besonders Alkohol, der auch bei höheren Temperaturen nicht zerfällt.

Eine Anwendungsmöglichkeit der gegenständlichen Erfindung ist zum Beispiel die Temperierung eines Körpers mit Peltierelementen und einer Zusatzheizung in einem großen Temperaturbereich. Die Peltierelemente befinden sich auf der, dem zu temperierenden Körper gegenüberliegenden Seite der Plattenanordnung, die Zusatzheizung im zu temperierenden Körper selbst. Bei niedrigen Temperaturen erfolgt die Regelung über die Peltierelemente, die hohen Temperaturen werden mit der Zusatzheizung erreicht. Die erforderliche Verringerung der Wärmeleitung zwischen Heizung und Peltierelementen bei hohen Temperaturen erfolgt ohne bewegliche Teile, sondern nur durch Ausnützung der physikalischen Eigenschaften von Flüssigkeiten.

Temperaturdifferenzen von mehr als 300° C zwischen den beiden Platten können durch diese Anordnung leicht erreicht werden, sodaß der gesamte erreichbare Temperaturbereich beträchtlich erweitert wird. Eine wesentliche Erweiterung des Anwendungsbereiches von Peltierelementen ist dadurch gegeben.

Bei der direkten Gewinnung von elektrischer Energie mit Peltierelementen kann die gegenständliche Erfindung derart angewendet werden, daß die heiße Seite der Anordnung durch diese Kammer von den Peltierelementen getrennt wird und dadurch höhere Temperaturen als die Grenztemperatur der Peltiereiemente ereichen kann. Je nach entzogener elektrischer Energie und daraus resultierendem Wärmefluß stellt sich die Dampfdichte in der Kammer automatisch ein. Eine ähnliche Anwendung kann auch in der Verfahrenstechnik erfolgen.

Soll eine Substanz oder ein Körper durch eine Wärmeankopplung an einen heißen Körper erwärmt werden, kann durch Zwischenschaltung einer erfindungsgemäßen Kammer der Wärmefluß begrenzt werden.

### Ausführung:

Die beiden Platten werden vorzugsweise aus einem gut wärmeleitenden Material gefertigt.

Die Oberfläche der beiden Platten innerhalb der Kammer (3) wird durch geeignete Oberflächenveredelung wärmereflektierend ausgeführt.

Die Seitenwände (5) werden vorzugsweise aus sehr dünnwandigem Edelstahl wegen seiner geringen Wärmeleitfähigkeit gefertigt.

Die Abdichtung der Kammer erfolgt vorzugsweise durch Verlötung der beiden Platten mit den Seitenwänden.

Als Flüssigkeit wird vorzugsweise eine Substanz mit geringer Verdampfungswärme und einem Siedepunkt deutlich unter der für den empfindlichen Teil kritischen Temperatur gewählt. Zum Beispiel hat Alkohol eine relativ niedrige Verdampfungswärme und eignet sich vorzüglich beim Einsatz von Peltierelementen, da beim Verdampfungsvorgang nicht zuviel Energie erforderlich ist.

Das Ausgleichsgefäß (4) ist gegen Verdampfung der Flüssigkeit dicht und besteht aus möglichst elastischen Wänden. Vorteilhafter Weise wird ein taschenförmiger Behälter aus dünnwandigem Kunststoff verwendet.

Zur einfachen Füllung des Systems wird beispielsweise ein Entlüftungsrohr (6) als Verbindungsleitung zum Inneren der Kammer (3) eingebaut. Das Ausgleichsgefäß (4) wird mit der Flüssigkeit gefüllt und an die Kammer angeschlossen. Durch Zusammendrücken des Ausgleichsgefäßes (4) wird die Flüssigkeit in die Kammer (3) gedrückt und die Luft entweicht durch das Entlüftungsrohr (6). Bei geeigneter Lage während der Füllung kann so das System luftfrei gefüllt werden. Nach erfolgter Füllung wird die zweite Verbindungsleitung abgeschlossen.

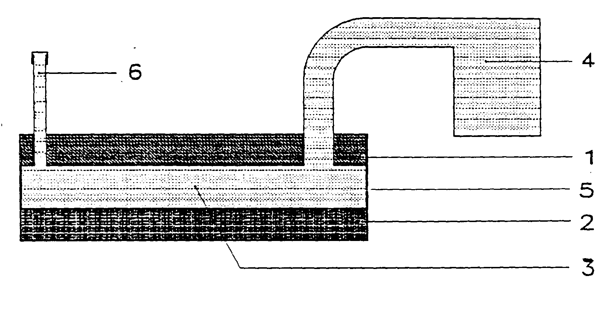

## Patentansprüche

1. Verfahren zur Begrenzung der Temperatur eines mit einer Heizung verbundenen Deckels (2), bei dem zwischen der Heizung (1) und dem zu beheizenden Deckel (2) eine Kammer (3) mit einem verdampfbaren, flüssigen Wärmeträger vorgesehen ist, dadurch gekennzeichnet, daß bei Erreichen der Siedetemperatur der verdampfte Wärmeträger in ein gekühltes Ausgleichsgefäß (4) gedrängt wird und die Beheizung des Deckels (2) durch die in der Kammer (3) verbleibende dampfförmige Phase des Wärmeträgers verringert wird.

2. Verfahren nach Anspruch 1, dadurch gekennzeichnet, daß als Wärmeträger eine Flüssigkeit mit geringer Verdampfungswärme, wie z.B. Alkohol, verwendet wird.

3. Verfahren nach Anspruch 1, dadurch gekennzeichnet, daß der Siedepunkt des Wärmeträgers unterhalb der Maximaltemperatur des zu beheizenden Teiles liegt.

4. Verfahren nach Anspruch 1, dadurch gekennzeichnet, daß beim Verdampfen der Flüssigkeit in der Kammer der entstehende Dampf im flexiblen Ausgleichsgefäß kondensiert wird und dadurch der Überdruck abgebaut wird.

5. Verfahren nach Anspruch 1, dadurch gekennzeichnet, daß beim Abkühlen der Kammer der im Ausgleichsbehälter befindliche Wärmeträger durch den auf den Ausgieichsbehälter wirkenden Luftdruck in die Kammer gepreßt wird und der gute Wärmeübergang von der Heizung auf den Deckel wieder hergestellt wird.

6. Vorrichtung zur Durchführung des Verfahrens nach mindestens einem der Ansprüche 1 bis 5, dadurch gekennzeichnet, daß zwischen einem Heizkörper (1) und dem beheiztem Deckel (2) eine Flüssigkeitskammer (3) verbunden mit einem gekühltem Ausgleichsgefäß (4) vorgesehen ist, die eine Umrandung (5) und ein Entlüftungsrohr (6) aufweist, wobei die Oberflächen des Heizkörpers (1) und des Deckels (2) im Rahmen der Kammer (3) wärmereflektierend ausgebildet sind und die Umrandung (5) aus einem schlecht wärmeleitenden, insbesondere dünnwandigen Material gebildet ist.

7. Vorrichtung nach Anspruch 6, dadurch gekennzeichnet, daß das Ausgleichsgefäß (4) taschen- oder balgartig aus einem chemisch resistenten Material gefertigt ist.

## Claims

1. A process for limiting the temperature of a cover (2) which is connected to a heater, with a chamber (3) for a vapourizable liquid heat-carrier provided between the heater (1) and the cover to be heated (2) , **characterized in that**, on arriving at boiling temperature, the vapourized heat-carrier is forced into a cooled equalizing reservoir (4) and heating of the cover (2) by the remaining vapourized phase of the heat-carrier in the chamber (3) is reduced.

2. A process according to Claim 1, **characterized in that** the heat-carrier is a liquid of low vapourizing heat, for example alcohol.

3. A process according to Claim 1, **characterized in that** the boiling point of the heat-carrier lies below the maximum temperature of the part to be heated.

4. A process according to Claim 1, **characterized in that** vapour developing in the chamber during vapourization of the liquid is condensed in the flexible equalizing reservoir, thus reducing the positive pressure.

5. A process according to Claim 1, **characterized in that** during cooling of the chamber the heat-carrier in the equalizing reservoir is forced into the chamber by air-pressure within the equalizing reservoir, and a good heat transfer from the heater to the cover is re-established.

6. A device for carrying out the process according to at least one of Claims 1 to 5, **characterized in that** between a heater (1) and the cover to be heated (2) is provided a liquid chamber (3) combined with a cooled equalizing reservoir (4) comprising a surround (5) and a ventilation pipe (6), and that the surfaces of the heater (1) and the cover (2) in the frame of the chamber (3) are designed to be heat-reflecting, and the surround (5) is made of a material of poor heat-conductivity, in particular a thin-walled material.

7. A device according to Claim 6, **characterized in that** the equalizing reservoir (4) is in the shape of a pocket or bellows and made of a chemically resistant material.

## Revendications

1. Procédé pour limiter la température d'un couvercle (2) associé à un moyen de chauffage, dans lequel est prévue, entre le moyen de chauffage (1) et le couvercle (2) à chauffer, une chambre (3) contenant un fluide caloporteur liquide vaporisable, caractérisé en ce que, lorsque sa température d'ébullition est atteinte, la vapeur du fluide caloporteur est refoulée dans un récipient d'égalisation refroidi (4) et le chauffage du couvercle (2) est réduit par l'intermédiaire de la phase vapeur du fluide caloporteur restant dans la chambre (3).

2. Procédé suivant la revendication 1 caractérisé en ce qu'on utilise, en tant que fluide caloporteur, un liquide à faible chaleur de vaporisation tel que par exemple un alcool.

3. Procédé suivant la revendication 1 caractérisé en ce que la température d'ébullition du fluide caloporteur est inférieure à la température maximale de l'élément à chauffer.

4. Procédé suivant la revendication 1 caractérisé en ce que, lors de la vaporisation du liquide se trouvant dans la chambre, la vapeur résultante est condensée dans un récipient d'égalisation flexible et de cette façon la surpression est supprimée.

5. Procédé suivant la revendication 1 caractérisé en ce que, lors du refroidissement de la chambre, le fluide caloporteur se trouvant dans le récipient d'égalisation est refoulé dans la chambre sous l'effet de la pression de l'air agissant sur le récipient d'égalisation et le processus de chauffage normal du couvercle par l'élément de chauffage est repris.

6. Dispositif pour la mise en oeuvre du procédé suivant l'une au moins des revendications 1 à 5 caractérisé en ce qu'entre un corps chauffant (1) et le couvercle chauffé (2) est disposée une chambre à liquide (3) reliée à un récipient d'égalisation refroidi (4) et qui présente une paroi latérale (5) et un tube de dégazage (6), les surfaces du corps chauffant (1) et du couvercle (2) se trouvant dans le cadre de la chambre (3) étant formées de manière à réfléchir la chaleur et la paroi latérale (5) étant constituée d'un matériau transmettant mal la chaleur et constituant en particulier une paroi mince.

7. Dispositif suivant la revendication 6 caractérisé en ce que le récipient d'égalisation (4), en forme de poche ou de soufflet, est réalisé en un matériau résistant chimiquement.
